# EUROPÄISCHE PATENTSCHRIFT

(11) **EP 1 273 215 B1**
(45) Veröffentlichungstag und Bekanntmachung des Hinweises auf die Patenterteilung: **14.03.2007**
(21) Anmeldenummer: 02014605.6
(22) Anmeldetag: 02.07.2002
(51) Int. Cl.: A01B 49/06

(54) **Landwirtschaftliche Bestellkombination**
Agricultural machinery combination
Machine combinée pour le travail agricole

(30) Priorität: 07.07.2001 DE 10133191
(43) Veröffentlichungstag der Anmeldung: 08.01.2003
(73) Patentinhaber: DEERE & COMPANY, Moline, Illinois 61265-8098 (US)
(72) Erfinder: Jüptner, Detlef, 66271 Kleinblittersdorf (DE)
(74) Vertreter: Holst, Sönke

(56) Entgegenhaltungen:
- EP-A- 0 255 630
- EP-A- 0 928 553
- DE-A- 2 528 930
- DE-A- 2 535 268
- DE-A- 3 708 324
- DE-A- 19 641 765
- DE-A- 19 733 210
- DE-A- 19 804 293

## Beschreibung

Die Erfindung betrifft eine landwirtschaftliche Bestellkombination, mit einem in einer Vorwärtsrichtung über ein Feld bewegbaren Rahmen, an dem sich als Arbeitselemente Bodenbearbeitungswerkzeuge und/oder eine Bodenwalze und mindestens eine nachlaufende Säeinrichtung abstützen, wobei Aktoren zur Einstellung der Arbeitstiefe und/oder des Arbeitsdrucks mindestens zweier unterschiedlicher Arbeitselemente vorgesehen sind.

Im Stand der Technik sind mit Bodenbearbeitungswerkzeugen ausgestattete, auch als Bestellkombinationen bezeichnete Sämaschinen bekannt. Sie können nach einer Pflug- oder Stoppelbearbeitung eingesetzt werden. Bei vielen Sämaschinen ist die Arbeitstiefe der Säeinrichtungen und/oder der Bodenbearbeitungseinrichtungen veränderbar.

Beispielsweise ist bei der Sämaschine Väderstad Rapid F die Tiefeneinstellung des Scheibenpaars auf eine voreingestellte Ablagetiefe durch Hydraulikzylinder einstellbar. Die Sämaschine Horsch DS/D 6 weist Bodenbearbeitungswerkzeuge an einem hydraulisch höhenverstellbaren Werkzeugträger auf. Die Drillmaschine Amazone Airstar Xpress ermöglicht, den Schardruck und den Druck auf den Striegel, der den Scharen nachläuft, hydraulisch den jeweiligen Bodenverhältnissen anzupassen. Ihre vorgelagerten Bodenbearbeitungswerkzeuge sind mechanisch höhenverstellbar. Die DE 198 21 394 A beschreibt eine Bestellkombination, bei der ein Bodenbearbeitungsgerät gegenüber einem Tragrahmen höhenverstellbar ist. An der Rückseite der Bestellkombination ist eine höhenverstellbare Bodenwalze vorgesehen, auf der sich die Bestellkombination abstützt.

Weiterhin ist es bekannt, mehrere Elemente von Sämaschinen miteinander mechanisch zu koppeln und gemeinsam zu verstellen. So schlagen die DE 198 04 293 A, DE 198 06 467 A und DE 198 55 937 A vor, an einem Scharrahmen Säschare mit vorlaufenden, federnd aufgehängten Walzenelementen zu befestigen. Der Scharrahmen ist gegenüber einem Tragrahmen der Bestellkombination durch eine Kuppeleinrichtung höhenverstellbar. Es werden somit die Säschare und die Walzenelemente gemeinsam in der Höhe verstellt. Die DE 196 20 016 A offenbart eine Bestellkombination, bei der eine Bodenwalze und Bodenbearbeitungswerkzeuge an einem gemeinsamen Rahmen befestigt sind, der am Hauptrahmen befestigt ist. Die Bodenwalze ist gegenüber den Bodenbearbeitungswerkzeugen derart höhenverstellbar, dass ihre Position die Arbeitstiefe der Bodenbearbeitungswerkzeuge definiert. Die DE 196 41 765 A schlägt bei einer derartigen Bestellkombination zusätzlich vor, die Höhe der Zugdeichsel zu verstellen, um die Arbeitstiefe der Bodenbearbeitungswerkzeuge bzw. einer ihnen vorgeordneten Planierschiene zu verstellen. Nach der DE 198 36 780 A ist dem Bodenbearbeitungsgerät einer Bestellkombination eine Bodenwalze zugeordnet, die höhenverstellbar ist und die Arbeitstiefe des Bodenbearbeitungsgeräts definiert. Die Bodenwalze wird gemeinsam mit dem Bodenbearbeitungsgerät höhenverstellt. Die DE-A-197 33 210 offenbart eine landwirtschaftliche Bestellkombination nach dem Oberbegriff des Anspruchs 1.

Zusammenfassend ist festzustellen, dass im Stand der Technik entweder verschiedene Elemente der Sämaschine einzeln verstellt werden, was den Nachteil aufweist, dass eine Veränderung einer Einstellung mehrerer Elemente, die bei Änderung der Bodeneigenschaften oder des Saatguts notwendig sein kann, trotz der Fernsteuerung aus der Kabine eines Zugfahrzeugs aufwändig und zeitraubend ist oder aber mehrere Elemente mechanisch miteinander gekoppelt sind. Dadurch sind aber die Freiheitsgrade beschränkt.

Die der Erfindung zugrunde liegende Aufgabe wird darin gesehen, eine Sämaschine mit mehreren Elementen bereitzustellen, die unproblematisch in die jeweils zweckmäßigen Arbeitspositionen verbringbar sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Mindestens zweien der folgenden Arbeitselemente der Bestellkombination wird jeweils ein Aktor zugeordnet: Bodenbearbeitungswerkzeug, Bodenwalze und Säeinrichtung. Der Aktor ist eingerichtet, die Arbeitstiefe und/oder den Arbeitsdruck des jeweiligen Arbeitselemente einzustellen. Derartige Aktoren sind in der Regel Hydraulikzylinder, obwohl auch rotierende Hydraulik- oder Elektromotoren verwendbar sind. Die mindestens zwei Aktoren sind mit einer Steuerungseinrichtung verbunden, welche die Betriebsparameter der Aktoren steuert, d. h. ohne Rückkopplung einstellt oder mit Rückkopplung durch einen entsprechenden Fühler regelt. Die Erfindung schlägt vor, die Steuerungseinrichtung mit Datensätzen zu beaufschlagen, die Informationen zur Einstellung von mindestens zwei Aktoren beinhalten. Anhand der Datensätze werden die Aktoren und mit ihnen die Arbeitselemente in die jeweils erforderliche Stellung verbracht.

Auf diese Weise ist es durch Abrufen eines einzigen Datensatzes möglich, mehrere Arbeitselemente der Bestellkombination in ihre Sollposition zu verbringen. Die Bedienung der Bestellkombination ist wesentlich vereinfacht, jedoch bleiben - im Gegensatz zu einer mechanischen Kopplung der Arbeitselemente - alle Einstellmöglichkeiten und Freiheitsgrade für die Arbeitselemente erhalten.

Es ist nicht unbedingt erforderlich, die kompletten Datensätze zur Steuerung aller Aktoren abzuspeichern, wenn die Datensätze durch die Steuerungseinrichtung aus abgespeicherten Daten abgeleitet werden. So können beispielsweise in einer Tabelle bodenartabhängige Daten abgelegt sein, anhand derer die Datensätze aus einer weiteren Tabelle abgerufen oder anhand entsprechender mathematischer Vorschriften algorithmisch berechnet werden. Der Vorteil ist eine Reduzierung der abzuspeichernden Datenmenge und die Möglichkeit einer Interpolation. Denkbar wäre auch, die Parameter von zwei Arbeitselementen aus den auswählbaren Daten eines Arbeitselements abzuleiten. So kann der Bediener einen Wert für die Sätiefe eingeben und die Steuerungseinrichtung anhand der gewählten Sätiefe den Druck der Bodenwalze und die Position der Bodenbearbeitungswerkzeuge festlegen.

In einer besonders einfachen Ausführungsform der Erfindung sind die Datensätze durch einen Bediener insbesondere manuell abrufbar. Mittels einer Tastatur oder eines berührungsempfindlichen Bildschirms oder durch Spracheingabe wird der jeweils als sinnvoll angesehene Datensatz ausgewählt, der beispielsweise von der Bodenart, Bodenfeuchtigkeit oder anderen Gegebenheiten abhängen kann.

Alternativ oder zusätzlich kann eine Karte abgespeichert sein, in der die Datensätze, bzw. Daten, aus denen die Datensätze ableitbar sind, in Abhängigkeit von der jeweiligen Position abgespeichert sind. Anhand der mittels eines Positionserfassungssystems (zum Beispiel GPS, DGPS oder eines anderen Satellitensystems oder eines Trägheitsnavigationssystems) erfassten jeweiligen Position der Bestellkombination bzw. eines sie ziehenden Fahrzeugs werden die Daten aus der abgespeicherten Karte abgerufen und zur Steuerung der Aktoren herangezogen.

Als Daten, von denen die Betriebswerte der Aktoren abhängen können, wären die Bodenart, die Bodenfeuchtigkeit, die Luftund/oder Bodentemperatur, die Art des Saatguts und die Witterungsbedingungen, wie derzeitige oder zu erwartende Regenmenge, Sonneneinstrahlung etc. oder eine beliebige Kombination daraus zu nennen. Anhand dieser Daten, die eingegeben oder durch entsprechende Sensoren erfasst bzw. durch eine Datenfernübertragung übermittelt werden können, werden anhand geeigneter Rechenvorschriften und/oder Tabellen die Datensätze zur Definition der Sollwerte der Betriebswerte der Aktoren bestimmt.

Die Betriebswerte der Aktoren der Bestellkombination unterscheiden sich bei einer Straßenfahrt und/oder im Vorgewende von den Betriebswerten bei der Bearbeitung eines Felds, da in diesen Fällen die Arbeitselemente anzuheben sind. Um dem Bediener die Arbeit zu erleichtern, bietet es sich an, einen Datensatz für das Vorgewende bzw. eine Straßenfahrt abrufbar zu gestalten. Das kann manuell auf einen Tastendruck hin erfolgen oder anhand eines Positionsbestimmungssystems (beispielsweise der oben erwähnten Art), das es ermöglicht, anhand einer Karte zu erkennen, ob ein Feld bearbeitet wird oder ein Vorgewende oder eine Straße befahren wird.

Ein derartiges Positionsbestimmungssystem ermöglicht auch, selbsttätig eine unbeabsichtigte Doppelbearbeitung eines Feldabschnitts zu vermeiden, indem ein Vergleich zwischen der aktuellen Position und einer abgelegten Information über die bereits abgearbeiteten Flächen durchgeführt wird. Ergibt der Vergleich, dass die jeweils überquerte Fläche schon bearbeitet wurde, werden die Arbeitselemente selbsttätig in eine Außerbetriebsstellung verbracht. Selbstverständlich ist eine manuelle Übersteuerung denkbar.

In der Zeichnung ist ein nachfolgend näher beschriebenes Ausführungsbeispiel der Erfindung dargestellt. Es zeigt:

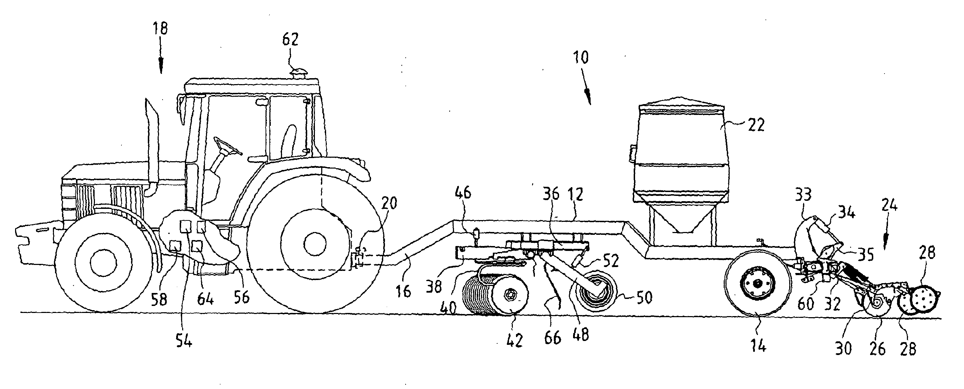

- Fig. 1: eine Seitenansicht einer erfindungsgemäßen Bestellkombination, die an ein Zugfahrzeug angekoppelt ist.

In Figur 1 ist eie landwirtschaftliche Bestellkombination 10 dargestellt. Sie weist einen sich in der Vorwärtsrichtung (in der Zeichnung von links nach rechts) erstreckenden Rahmen 12 auf, der sich über ein Laufräder 14 umfassendes Fahrwerk auf dem Erdboden abstützt. An seinem vorderen Ende ist der Rahmen 12 über eine Deichsel 18 über eine lösbare Kupplung 20 mit einem Zugfahrzeug 18 in Form eines Ackerschleppers verbunden.

Der Rahmen 12 trägt vor den Laufrädern 14 einen Saatgutbehälter 22 zur Aufnahme von Saatgut. Durch, in der Zeichnung nicht dargestellte Messsysteme wird das Saatgut aus dem Saatgutbehälter 22 abgemessen und über Saatgutleitungen an der Rückseite des Rahmens 12 angeordneten Säeinrichtungen 24 zugeführt, die einen Furchenöffner 26 in Form einer Scheibe, Säschare 30, die das Saatgut in die durch den Furchenöffner 26 erzeugte Furche abgeben und Schließräder 28 zum anschließenden Schließen der Furche umfassen.

Es sind mehrere Säeinrichtungen 24 seitlich nebeneinander an einem sich am Rahmen 12 abstützenden, sich quer zur Vorwärtsrichtung erstreckenden Werkzeugträger 32 abgestützt. Die Säeinrichtungen 24 sind um eine parallel zur Längsachse des Werkzeugträgers 32 verlaufende Achse schwenkbar gelagert. Der Schwenkwinkel aller Säeinrichtungen 24 und damit die Sätiefe wird durch einen Aktor 34 in Form eines Hydraulikzylinders festgelegt, der sich zwischen einer mit dem Rahmen 12 verbundenen Halterung 33 und einem mit den Säeinrichtungen 24 gekoppelten Arm 35 erstreckt.

Vor dem Saatgutbehälter 22 ist unterhalb des Rahmens 12 ein Trägerrahmen 36 befestigt. Der Trägerrahmen 36 haltert einen um eine horizontale, quer zur Vorwärtsrichtung verlaufende Schwenkachse 44 schwenkbaren Schwenkrahmen 38, an dem sich über eine U-förmige Feder 40 ein Bodenbearbeitungswerkzeug 42 in Form einer Scheibenegge abstützt. Ein zwischen Rahmen 12 und Schwenkrahmen 38 angeordneter Aktor 46 in Form eines Hydraulikzylinders definiert den Schwenkwinkel des Schwenkrahmens 38 um die Schwenkachse 44. Der Aktor 46 ist mit einem einstellbaren Druck betreibbar und steuert auf diese Weise den Druck, mit dem das Bodenbearbeitungswerkzeug 42 auf den Erdboden einwirkt. Anstelle der Scheibenegge kann ein beliebiges anderes Bodenbearbeitungswerkzeug 42 verwendet werden.

Am Trägerrahmen 36 ist weiterhin in Vorwärtsrichtung hinter dem Bodenbearbeitungswerkzeug 42 eine, um eine parallel zur Schwenkachse 44 verlaufende Achse, schwenkbare Halterung 48 angelenkt, an deren unterem Ende eine Bodenwalze 50 in Form eines Reifenpackers angebracht ist. Ein Aktor 52 in Form eines Hydraulikzylinders, der sich zwischen dem Trägerrahmen 36 und der Halterung 48 erstreckt, definiert den Schwenkwinkel der Halterung 48. Der Aktor 52 ist mit einem einstellbaren Druck beaufschlagbar und steuert auf diese Weise den Druck, mit dem die Bodenwalze 42 auf den Erdboden einwirkt. Anstelle eines Reifenpackers könnte jede beliebige Art von Walzen Verwendung finden, beispielsweise Schrägstab-Packerwalzen, Rohrstab-Packerwalzen, Scheiben-Packerwalzen, Zahn-Packerwalzen, Spiral-Packerwalzen und Prismenwalzen. Die Bodenwalze 50 könnte auch als Frontreifenpacker oder Stützwalze ausgeführt sein, d. h. ein Teilgewicht der Bestellkombination tragen und zur Tiefenführung dienen, wobei die Laufräder 14 bei der Arbeit auszuheben wären. Außer der dargestellten starren Befestigung der Bodenwalze 50 an der Halterung 48 wäre auch die Zwischenschaltung einer Feder denkbar. Auch könnte jedes einzelne Rad der Bodenwalze 50 über einen ihm zugeordneten Aktor 52 steuerbar sein.

Anzumerken ist, dass an beiden seitlichen Enden des Bodenbearbeitungswerkzeugs 42 mit dem Schwenkrahmen 38 verbundene U-förmige Federn 40 angeordnet sind. Auch sind Halterungen 48 an beiden seitlichen Enden der Bodenwalze 50 angeordnet und mit dem Trägerrahmen 36 verbunden. Das Bodenbearbeitungswerkzeug 42 und die Bodenwalze 50 können sich aus' drei oder mehr seitlich nebeneinander angeordneten Abschnitten zusammensetzen, von denen die Äußeren, in an sich bekannter Weise, zum Straßentransport hochklappbar sind. Dazu sind entsprechende Antriebe in Form von Hydraulikzylindern vorzusehen.

Zwischen dem Bodenbearbeitungswerkzeug 42 und der Bodenwalze 50 ist ein Striegel 66 angeordnet, der mit dem Trägerrahmen 36 verbunden ist.

Das Zugfahrzeug 18 ist mit einer Steuerungseinrichtung 54 ausgestattet, die eingerichtet ist, über in der Zeichnung nicht dargestellte Leitungen die Aktoren 34, 46 und 52 mittels einer vorzugsweise Proportionalventile enthaltenden Ventileinrichtung 56 aus einer Quelle 58 unter Druck stehenden Hydraulikfluids mit Hydraulikfluid zu beaufschlagen bzw. zu entlasten. In der dargestellten Ausführungsform sind die Aktoren 34, 46 und 52 doppeltwirkend, um die Arbeitselemente der Bestellkombination 10 im Vorgewende oder bei einer Straßenfahrt ausheben zu können. Denkbar wäre aber auch die Verwendung einfachwirkender Hydraulikzylinder. Die Steuerungseinrichtung 54 ist somit eingerichtet, den Druck der Aktoren 46 und 52 vorzugeben. Eine Information über die Position des Aktors 34 wird der Steuerungseinrichtung 54 über einen Fühler 60 zugeführt, so dass die Sätiefe der Säeinrichtungen 24 durch die Steuerungseinrichtung 54 mittels der Ventileinrichtung 56 regelbar ist.

Der Steuerungseinrichtung 54 werden von einer Satellitenempfangsantenne 62, die zum Empfang von Signalen des GPS (Global Positioning Systems) eingerichtet ist, eine Information über die jeweilige Position des Zugfahrzeugs 54 enthaltende Signale zugeführt. In einer Speichereinrichtung 64 ist eine Sollwertkarte abgelegt, die vor einem Bearbeitungsvorgang auf einem Computer erstellt wurde und auf beliebige Weise (per austauschbarem Datenspeichermedium, wie Diskette oder drahtlos) auf die Speichereinrichtung 64 übertragen wurde. Die Sollwertkarte wurde anhand von vorhandenen Informationen über die Art des Bodens, die Art des Saatguts und verschiedene andere beim Bestellen zu berücksichtigende Parameter erstellt, wobei eine Begutachtung und Änderung durch den Landwirt möglich ist. Sie enthält ortsabhängige Informationen über den Druck des Bodenbearbeitungswerkzeugs 42 auf den Erdboden, den Druck der Bodenwalze 50 auf den Erdboden und die Sätiefe.

Beim Bearbeiten eines Felds werden anhand der durch die Satellitenempfangsantenne 62 erzeugten Information über den jeweiligen Standort, wobei zum Ausgleich des Versatzes auch eine Umrechnung zwischen der Position der Satellitenempfangsantenne 62 und der Bestellkombination 10 bzw. ihrer Arbeitselemente 24, 42 und 50 möglich wäre, aus der Sollwertkarte in der Speichereinrichtung 64 Datensätze ausgelesen, welche eine Information über den Soll-Druck des Bodenbearbeitungswerkzeügs 42, den Soll-Druck der Bodenwalze 50 und die Soll-Sätiefe enthalten. Den Datensätzen entsprechend werden durch die Steuerung 54 und die Ventileinrichtung 56 die Aktoren 34, 46 und 52 gesteuert. Durch die Steuerung des Drucks der Bodenwalze 50 ist ein ständiger Bodenkontakt und ein gleichmäßiger, optimal eingestellter Bodendruck möglich. Auf dem Vorgewende am Rand eines Felds werden die Aktoren 34, 46 und 52 veranlasst, die Arbeitselemente der Bestellkombination 10 auszuheben, also das Bodenbearbeitungswerkzeug 42, die Bodenwalze 50 und die Säeinrichtung 24.

## Patentansprüche

1. Landwirtschaftliche Bestellkombination (10), mit einem in einer Vorwärtsrichtung über ein Feld bewegbaren Rahmen (12), an dem sich als Arbeitselemente Bodenbearbeitungswerkzeuge (42) und/oder eine Bodenwalze (50) und mindestens eine nachlaufende Säeinrichtung (24) abstützen, wobei Aktoren (34, 46, 52) zur Einstellung der Arbeitstiefe und/oder des Arbeitsdrucks mindestens zweier unterschiedlicher Arbeitselemente vorgesehen sind, **dadurch gekennzeichnet, dass** die Aktoren (34, 46, 52) mit einer Steuerungseinrichtung (54) verbunden sind, die mit Datensätzen beaufschlagbar ist, die Informationen zur Einstellung von den mindestens zwei Aktoren (34, 46, 52) enthalten, und dass die Steuerungseinrichtung (54) betreibbar ist, die Aktoren (34, 46, 52) anhand der Datensätze zu steuern.

2. Bestellkombination (10) nach Anspruch 1, **dadurch gekennzeichnet, dass** die Datensätze aus abgespeicherten Daten abgeleitet werden.

3. Bestellkombination (10) nach Anspruch 1 oder 2, **dadurch gekennzeichnet, dass** die Datensätze bzw. Daten, aus denen die Daten abgeleitet werden, durch einen Bediener abrufbar sind.

4. Bestellkombination (10) nach einem der Ansprüche 1 bis 3, **dadurch gekennzeichnet, dass** die Datensätze bzw. Daten, aus denen die Daten abgeleitet werden, georeferenziert abgespeichert sind und anhand von Positionsdaten, die von einem Positionsbestimmungssystem bereitgestellt werden, abgerufen werden.

5. Bestellkombination (10) nach einem der vorhergehenden Ansprüche, **dadurch gekennzeichnet, dass** die Daten von der Bodenart und/oder der Bodenfeuchtigkeit und/oder der Temperatur und/oder der Art des Saatguts und/oder von den Witterungsbedingungen abhängen.

6. Bestellkombination (10) nach einem der vorhergehenden Ansprüche, **dadurch gekennzeichnet, dass** ein Datensatz für ein Vorgewende und/oder eine Straßenfahrt abrufbar ist.

7. Bestellkombination (10) nach Anspruch 6, **dadurch gekennzeichnet, dass** der Datensatz für das Vorgewende und/oder die Straßenfahrt anhand der mit einem Positionsbestimmungssystem bestimmten Position und einer abgespeicherten Karte abgerufen wird.

8. Bestellkombination (10) nach einem der vorhergehenden Ansprüche, **dadurch gekennzeichnet, dass** die Aktoren (34, 46, 52) beim Überqueren einer bereits bearbeiteten Fläche selbsttätig in eine Außerbetriebsposition verbracht werden.

## Claims

1. Agricultural cultivating and sowing combination (10), with a frame (12) movable in a forwards direction over a field, whereon are supported as working elements ground working tools (42) and/or a ground roller (50) and at least one trailing seeding device (24), wherein actuators (34, 46, 52) for adjusting the working depth and/or the working pressure of at least two different working elements are provided, **characterized in that** the actuators (34, 46, 52) are connected to a control device (54) which can be acted upon by data records which hold information for adjusting the at least two actuators (34, 46, 52), and **in that** the control device (54) is operable to control the actuators (34, 46, 52) on the basis of the data records.

2. A cultivating and sowing combination (10) according to claim 1, **characterized in that** the data records are derived from stored data.

3. A cultivating and sowing combination (10) according to claim 1 or 2, **characterized in that** the data records or data from which the data are derived can be retrieved by an operator.

4. A cultivating and sowing combination (10) according to any of claims 1 to 3, **characterized in that** the data sets or data from which the data are derived are stored geographically referenced and are retrieved on the basis of position data which are provided by a position determining system.

5. A cultivating and sowing combination (10) according to any of the preceding claims, **characterized in that** the data depend on the kind of ground and/or the ground moisture and/or the temperature and/or the kind of seeds and/or on the weather conditions.

6. A cultivating and sowing combination (10) according to any of the preceding claims, **characterized in that** a data record for a headland and/or road travel can be retrieved.

7. A cultivating and sowing combination (10) according to claim 6, **characterized in that** the data set for the headland and/or the road travel is retrieved on the basis of a position determining system and a stored card.

8. A cultivating and sowing combination (10) according to any of the preceding claims, **characterized in that** the actuators (34, 46, 52) are automatically brought into an out of operation position on crossing over an already worked area.

## Revendications

1. Machine agricole combinée pour le travail du sol (10), comportant un châssis (12), qui est apte à être déplacé sur un champ dans la direction d'avancement et sur lequel prennent appui des éléments de travail formés par des outils de travail du sol (42) et/ou un rouleau de préparation du sol (50) et au moins un semoir (24) monté en aval de ceux-ci, des actuateurs (34, 46, 52) étant prévus pour régler la profondeur de travail et/ou la pression de travail d'au moins deux des éléments de travail différents, **caractérisée en ce que** les actuateurs (34, 46, 52) sont reliés à un dispositif de commande (54), qui peut recevoir des enregistrements de données qui contiennent des informations sur le réglage desdits au moins deux actuateurs (34, 46, 52), et **en ce que** le dispositif de commande (54) peut être utilisé pour commander les actuateurs (34, 46, 52) à l'appui des enregistrements de données.

2. Machine combinée pour le travail du sol (10) selon la revendication 1, **caractérisée en ce que** les enregistrements de données sont dérivés de données stockées en mémoire.

3. Machine combinée pour le travail du sol (10) selon la revendication 1 ou 2, **caractérisée en ce que** les enregistrements de données ou les données, à partir desquelles sont dérivées les données, peuvent être chargées par un opérateur.

4. Machine combinée pour le travail du sol (10) selon l'une quelconque des revendications 1 à 3, **caractérisée en ce que** les enregistrements de données ou les données, à partir desquelles sont dérivées les données, sont stockés en mémoire sous forme géoréférencée et sont chargés à l'appui de données de positionnement qui sont mises à disposition par un système de détermination de position.

5. Machine combinée pour le travail du sol (10) selon l'une quelconque des revendications précédentes, **caractérisée en ce que** les données dépendent de la nature du sol et/ou de l'humidité du sol et/ou de la température et/ou du type de semences et/ou des conditions météorologiques.

6. Machine combinée pour le travail du sol (10) selon l'une quelconque des revendications précédentes, **caractérisée en ce qu'**il est possible de charger un enregistrement de données pour un demi-tour en bout de champ et/ou un transport sur route.

7. Machine combinée pour le travail du sol (10) selon la revendication 6, **caractérisée en ce que** l'enregistrement de données pour le demi-tour en bout de champ et/ou le transport sur route est chargé à l'appui de la position déterminée par le système de détermination de position et une carte stockée en mémoire.

8. Machine combinée pour le travail du sol (10) selon l'une quelconque des revendications précédentes, **caractérisée en ce que** les actuateurs (34, 46, 52) sont amenés automatiquement dans une position hors service lors de la traversée d'une surface déjà traitée.
